# EUROPÄISCHE PATENTSCHRIFT

(11) **EP 0 818 350 B1**
(45) Veröffentlichungstag und Bekanntmachung des Hinweises auf die Patenterteilung: **05.12.2001**
(21) Anmeldenummer: 97111657.9
(22) Anmeldetag: 09.07.1997
(51) Int. Cl.: B60P 1/43

(54) **Fahrzeug**
Vehicle
Véhicule

(30) Priorität: 12.07.1996 DE 29612209 U
(43) Veröffentlichungstag der Anmeldung: 14.01.1998
(73) Patentinhaber: Kässbohrer Transport Technik GmbH, 5020 Salzburg (AT)
(72) Erfinder: Ebner, Heinrich, 5083 Gartenau (AT)
(74) Vertreter: Grünecker, Kinkeldey, Stockmair & Schwanhäusser Anwaltssozietät

(56) Entgegenhaltungen:
- US-A- 3 700 124
- US-A- 5 305 486
- US-A- 5 393 192

## Beschreibung

Die Erfindung betrifft ein Fahrzeug mit wenigstens einer Ladeplattform, an derem hinteren Ende eine Auffahrrampe in einer Rampenaufnahme mit einer Ausziehöffnung zwischen einer Ausziehstellung und einer Einschubstellung verstellbar ist, wobei die Auffahrrampe zum automatischen Verschieben mit einem Antrieb bewegungsverbunden und in ihrer Ausziehstellung selbsttätig in einer geneigten Auffahrstellung angeordnet ist.

Ein solches Fahrzeug ist aus der US-A-5 305 486 bekannt. Bei diesem Fahrzeug ist eine automatische ausfahrbare Plattform oder Auffahrrampe in ihrer Ausziehstellung selbsttätig in einer Auffahrstellung angeordnet. Die Plattform dient dazu, Rollstuhlfahrern das selbständige Einfahren in ein Fahrzeug durch eine Seitentür zu ermöglichen.

Aus der Praxis ist weiterhin ein Fahrzeug beispielsweise zum Transport von anderen Fahrzeugen bekannt, wobei eine Ladeplattform in an sich bekannter Weise Teil eines einstöckigen oder zweistöckigen Zugfahrzeugs oder Anhängers ist. Diese Ladeplattformen sind teilweise verschwenkbar, um die zu transportierenden Fahrzeuge leichter auffahren zu können. Um ein Auffahren am hinteren Ende der Ladeplattform zu ermöglichen, ist eine Auffahrrampe in der Regel unterhalb der Ladeplattform ausziehbar gelagert. Solange das Transportfahrzeug bewegt wird, ist die Auffahrrampe in ihrer Einschubstellung innerhalb einer Rampenaufnahme angeordnet. Zum Be- oder Entladen der zu transportierenden Fahrzeuge wird die Auffahrrampe durch den Fahrer in ihre Ausziehstellung aus der Rampenaufnahme manuell ausgezogen. Dann wird die Auffahrrampe am Boden abgelegt und mit ihrem dem hinteren Ende der Ladeplattform zuweisenden Ende in eine entsprechende Vorrichtung an der Rampenaufnahme oder an der Ladeplattform eingehängt. Dadurch ist die Auffahrrampe in einer geneigten Auffahrstellung angeordnet, in der sie Ladeplattform und beispielsweise die Oberfläche einer Straße zum Auffahren der zu transportierenden Fahrzeuge auf die Ladeplattform miteinander verbindet.

Zum Be- und Entladen muss die Auffahrrampe im Durchschnitt bis zu fünfmal an einem Tag zwischen Einschubstellung und Ausziehstellung verschoben werden und in ihrer geneigten Auffahrstellung angeordnet werden. Bei einem Gewicht einer Auffahrrampe von ca. 30 kg ist es ein erheblicher, zeitintensiver Arbeitsaufwand.

Der Erfindung liegt im Hinblick auf die US-A-5 305 486 die Aufgabe zugrunde, das Fahrzeug der eingangs genannten Art dahingehend so zu verbessern, dass in konstruktiv einfacher Weise ein Verkanten der Auffahrrampe bei ihrem Ausschieben aus der Ausziehöffnung oder in den Führungen der Rampenaufnahme vermieden wird.

Diese Aufgabe wird im Zusammenhang mit den Merkmalen des Oberbegriffs des Patentanspruchs 1 dadurch gelöst, dass in Richtung Ausziehstellung der Rampenaufnahme nachgeordnet und in dieser Richtung beabstandet zur Ausziehöffnung seitliche Führungselemente für die Auffahrrampe angeordnet sind.

Auf diese Weise wird die Auffahrrampe bei ihrer automatischen Bewegung zwischen Ausziehstellung und Einschubstellung so geführt, dass ein Verkanten während der Bewegung in der Ausziehöffnung oder in Führungen der Rampenaufnahme vermieden wird.

Um die Führung der Auffahrrampe und deren allmähliche Neigung in die Auffahrstellung verbessert durchzuführen, ist im wesentlichen an einem der Rampenaufnahme in Ausziehstellung, beziehungsweise in Auffahrstellung zugeordneten Lagerende der Auffahrrampe wenigstens ein entlang einer Führung der Rampenaufnahme bewegbares Führungselement angeordnet.

Im einfachsten Fall und zur Verminderung von Reibung ist das Führungselement eine um eine horizontale Achse drehbar gelagerte Führungsrolle, die entlang der Führung beim Verschieben der Auffahrrampe abrollt.

Eine solche Führungsrolle kann beispielsweise in etwa mittig zur Querrichtung der Auffahrrampe an derem Lagerende angeordnet sein. Um eine verbesserte Führung zu erhalten, können zwei Führungsrollen seitlich zur Auffahrrampe an einer Querachse am Lagerende gelagert sein. Entsprechend sind zwei Führungen für die Führungsrollen vorgesehen. Dabei erweist es sich als günstig, wenn die Führungen beispielsweise durch zwei Längsträger der Rampenaufnahme oder des Fahrzeugs gebildet sind. Ein solcher Längsträger kann beispielsweise ein im wesentlichen U-förmiges Profil haben, wobei das Profil in Richtung Auffahrrampe offen ist und die Führungsrollen zwischen den beiden U-Schenkeln abrollen.

Der Antrieb für die Auffahrrampe kann durch einen elektrischen Stellmotor, Hydraulikzylinder oder dergleichen gebildet sein. Bevorzugt wird ein Antrieb eingesetzt, der robust ist und auch im Spritzbereich der Räder direkt anordbar ist. Ein solcher Antrieb kann durch einen Hydraulikmotor und eine mit diesem und der Auffahrrampe bewegungsverbundene Endloskette gebildet sein.

Im einfachsten Fall ist dabei am Hydraulikmotor ein Kettenrad befestigt, durch das die Endloskette bewegt wird. Weiterhin ist die Endloskette um eine Umlenkrolle beispielsweise benachbart zu einer Ausziehöffnung der Rampenaufnahme herumgeführt.

Zur Bewegungsverbindung von Endloskette und Auffahrrampe, kann die Kette mit der Querachse am Lagerende der Auffahrrampe verbunden sein. Dies kann beispielsweise dadurch erfolgen, daß ein Kettenglied an der Querachse angeschweißt ist.

Die Auffahrrampe kann einteilig ausgebildet sein und sich über die gesamte Breite der Ladeplattform erstrecken. Da die Ladeplattformen in der Regel durch zwei parallel zueinander verlaufenden Fahrspuren gebildet ist, kann die Auffahrrampe durch zwei voneinander beabstandete Auffahrschienen gebildet sein, wobei jeweils eine Auffahrschiene einer Fahrspur der Ladeplattform zugeordnet ist. Im weiteren ist darauf zu achten, daß die Auffahrrampe einteilig oder durch entsprechende Auffahrschienen gebildet ist sein kann.

Um ein Ein- und Ausschieben der Auffahrrampe durch die Ausziehöffnung der Rampenaufnahme zu erleichtern, können quer zur Rampenaufnahme im Bereich der Ausziehöffnung Lagerrollen um eine horizontale Drehachse drehbar gelagert sein. Auf diesen liegt die Auffahrrampe mit ihrer Unterseite auf und ist leichter verschiebbar.

Um die Ausziehstellung, beziehungsweise Auffahrstellung, festzulegen, kann beispielsweise ein Endschalter oder ein sonstiger Sensor vorgesehen sein, der das Erreichen der Ausziehstellung feststellt. Weiterhin kann die Auffahrrampe an ihrem Lagerende wenigstens einen Begrenzungsanschlag aufweisen, der bei Erreichen der Ausziehstellung mit einem entsprechenden Gegenanschlag, wie beispielswelse den Lagerrollen, in Anlage gerät.

Um die Ausziehöffnung der Rampenaufnahme mit möglichst geringer Höhe ausbilden zu können, erweist es sich als Vorteil, wenn die Auffahrrampe an ihrem oder benachbart zu ihrem Lagerende auf ihrer Unterseite eine Neigungsschräge aufweist, mit der sie beispielsweise auf den Lagerrollen in Ausziehstellung aufliegt.

Um in der Einschubstellung der Auffahrrampe die Ausziehöffnung schließen zu können, kann dieser ein Verschlußdeckel zugeordnet sein. Der Verschlußdeckel kann an- und abschraubbar oder vorzugsweise so an der Rampenaufnahme befestigt sein, daß er in Richtung Schließstellung federbelastet ist und automatisch die Ausziehöffnung wieder schließt.

Vorzugsweise sind diese Führungselemente durch am Verschlußdeckel drehbar gelagerte, seitlich an der Auffahrrampe abrollende Führungsrollen gebildet.

Ist die Auffahrrampe aus zwei Auffahrschienen gebildet, reicht die Anordnung eines Hydraulikmotors, der gleichzeitig jeweils eine Kette für jede Auffahrschiene antreibt, wobei die Ketten beispielsweise im wesentlichen mittig längs der Auffahrschienen verlaufen.

Der Verschlußdeckel kann so ausgebildet sein, daß er beispielsweise in der Ausziehstellung der Auffahrrampe von oben auf dieser aufliegt und einen möglichen Höhenunterschied zwischen Ladeplattform und Auffahrrampe überbrückt. Um den Verschlußdeckel vereinfacht und mit geringerer Stabilität herstellen zu können, kann der Verschlußdeckel an seinem unteren Ende um eine horizontale Schwenkachse an der Rampenaufnahme oder am Fahrzeug verschwenkbar gelagert sein und an seinem oberen Ende eine Gleitschräge zur Anlage an die Unterseite der Auffahrrampe aufweisen. Auf diese Weise klappt der Verschlußdeckel beim Ausschieben der Auffahrrampe nach unten weg und legt sich mit der Gleitschräge an die Unterseite der Auffahrrampe an.

Um in diesem Fall die Reibung zwischen Unterseite der Äuffahrrampe und Gleitschräge und deren gegenseitige Abnutzung zu vermindern, kann eine Gleitauflage auf der Gleitschräge zumindest stellenweise in Querrichtung der Auffahrrampe angeordnet sein.

Die Auffahrrampe beziehungsweise die Auffahrschienen sind vorzugsweise aus Aluminium hergestellt. Die Gleitauflage kann beispielsweise aus einer Kunststoffauflage gebildet sein.

Im folgenden wird ein vorteilhaftes Ausführungsbeispiel der Erfindung anhand der in der Zeichnung beigefügten Figuren näher erläutert und beschrieben.

Es zeigen:
- Figur 1: eine Seitenansicht eines erfindungsgemäßen Fahrzeugs;
- Figur 2: eine vergrößerte Darstellung eines Details "Z" aus Figur 1, und
- Figur 3: eine vergrößerte Darstellung eines Details "X" aus Figur 2.

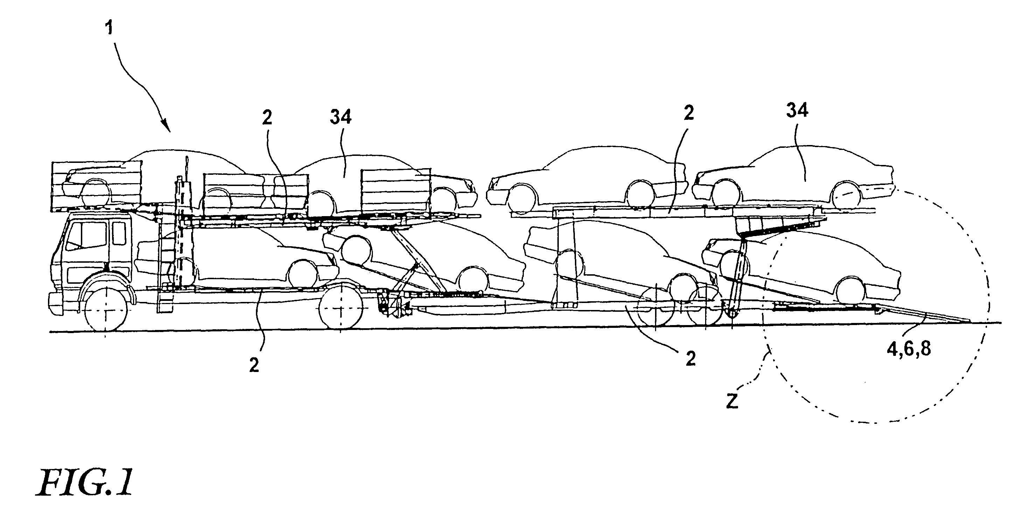

In Figur 1 ist eine Seitenansicht eines als Autotransporters ausgebildeten Fahrzeugs 1 dargestellt. Das Fahrzeug ist durch ein Zugfahrzeug und einen Anhänger gebildet, von denen beide obere und untere Ladeplattformen 2 aufweisen. Auf den Ladeplattformen sind eine Anzahl von Fahrzeugen 34 teilweise gekippt über entsprechende Kippplattformen aufgeladen. Am hinteren Ende des Fahrzeugs 1 ist eine Auffahrrampe 4 in ihrer Ausziehstellung 6 dargestellt, welche gleichzeitig der geneigten Auffahrstellung 8 entspricht, in der Fahrzeuge 34 be- und entladbar sind.

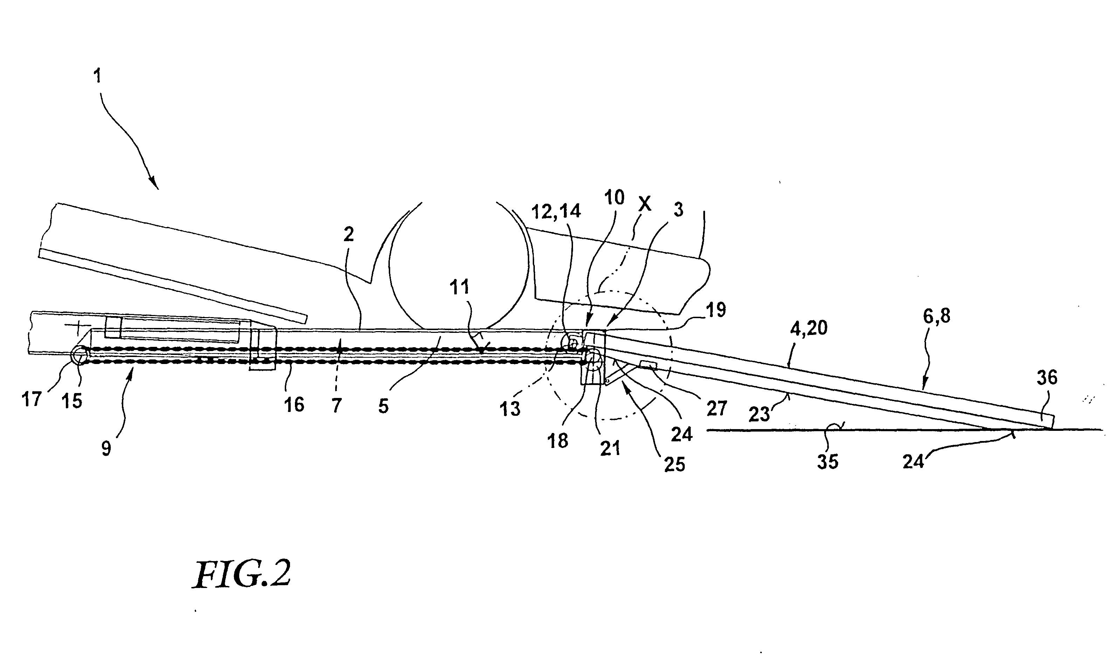

In Figur 2 ist ein Detail "Z" aus Figur 1 vergrößert dargestellt.

Das Fahrzeug 1 weist an seinem hinteren Ende unterhalb der Ladeplattform 2 eine Rampenaufnahme 5 auf, aus der die Auffahrrampe 4 mittels eines Antriebs 9 ausgeschoben ist. Entsprechend ist die Auffahrrampe 4 in ihrer Ausziehstellung 6, beziehungsweise Auffahrstellung 8 angeordnet. Die Auffahrrampe 4 kann durch zwei nebeneinander angeordnete Auffahrschienen 20 gebildet sein, von denen jeweils eine Auffahrschiene einer Radspur oder Auffahrspur für ein Fahrzeug 34 zugeordnet ist.

Innerhalb der Rampenaufnahme 5 kann die Auffahrrampe 4 in ihrer (nicht dargestellten) Einschubstellung 7 angeordnet sein. Zum Verschieben der Auffahrrampe ist der Antrieb 9 durch einen Hydraulikmotor 15 und eine Endloskette 16 gebildet. An der Drehachse des Hydraulikmotors 15 ist ein Kettenrad 17 angeordnet, um das die Endloskette 16 herumgeführt ist. An ihrem anderen Ende ist die Endloskette um eine Umlenkrolle 18 herumgeführt, die an einem hinteren Ende 3 der Ladeplatteform 2 angeordnet, beziehungsweise einer Ausziehöffnung 19 der Rampenaufnahme 5 zugeordnet ist.

Die Endloskette 16 verläuft unterhalb der Auffahrrampe 4 in deren Einschubstellung, wobei die Endloskette mittig zur Auffahrrampe verläuft.

Die Auffahrrampe 4 ist mit ihrem Lagerende 10 innerhalb der Rampenaufnahme 5 angeordnet, wobei an dem Lagerende seitlich von der Auffahrrampe 4 abstehende Führungsrollen 14 als Führungselemente 12 angeordnet sind. Die beidseitig von der Auffahrrampe 4 abstehenden Führungsrollen 14 sind um eine horizontale Achse oder Querachse 13 drehbar gelagert. Die Führungsrollen 14 sind entlang von Führungen 11 abrollbar. Diese sind durch im wesentlichen U-förmige Längsträger gebildet, wobei die Führungsrollen 14 zwischen den U-Schenkeln abrollen.

Im Bereich der Ausziehöffnung 19 sind weitere Lagerrollen 21 um eine horizontale Drehachse drehbar gelagert, auf denen eine Unterseite 23 der Auffahrrahme 4 abrollt. Jeder einzelnen Auffahrschiene 20 können beispielsweise vier solcher nebeneinander angeordneter Lagerrollen 21 zugeordnet sein. Dabei ist die Umlenkrolle 18 in der Regel mittig zwischen den Lagerrollen 21 angeordnet, so daß jeweils ein Lagerrollenpaar in Querrichtung beidseitig zur Umlenkrolle angeordnet ist.

Die Ausziehöffnung 19 ist durch einen Verschlußdeckel 25 verschließbar, der in Figur 2 nach hinten und unten relativ zur Ausziehöffnung 19 weggeklappt ist. An dem Verschlußdeckel 25 sind beidseitig zur Auffahrrampe 4 Führungsrollen 27 drehbar gelagert, die an entsprechenden Seiten der Auffahrrampe 4 abrollen. Die Führungsrollen 27 können direkt an einer Seitenfläche der Auffahrrampe 4 oder an einer von der Auffahrrampe 4 nach unten abstehenden und einwärts versetzten Anlageschiene abrollen. Diese kann gleichzeitig zur Versteifung und Verstärkung der Auffahrrampe 4 dienen.

Die Auffahrrampe 4 weist an ihren beiden Enden, das heißt an ihrem Lagerende 10 und an ihrem Auffahrende 36, auf ihrer Unterseite 23 Neigungsschrägen 24 auf. Die Neigungsschräge 24 am Auffahrende 36 liegt auf einem Untergrund 35 auf und durch die Neigungsschräge 24 am Lagerende 10 weist die Auffahrrampe 4 in diesem Bereich eine geringere Höhe auf.

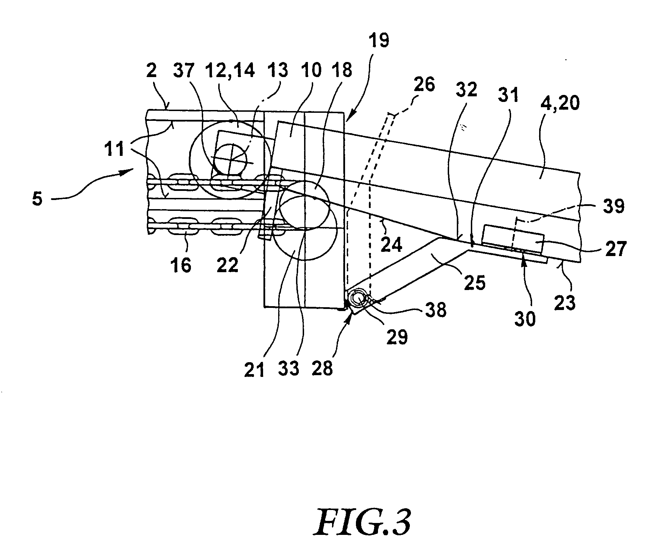

In Figur 3 ist ein Detail "X" aus Figur 2 vergrößert dargestellt. Der Verschlußdeckel 25 ist an seinem unteren Ende 28 an der Rampenaufnahme um eine Schwenkachse 29 verschwenkbar gelagert. Durch ein Federelement 38 ist der Verschlußdeckel 25 in Richtung zu seiner Schließstellung 26 kraftbelastet. Der Verschlußdeckel 25 weist an seinem oberen Ende 30 eine nach hinten abgekantete Gleitschräge 31 auf. Diese verläuft im wesentlichen parallel zu der Unterseite 23 der Auffahrrampe 4 in deren Ausziehstellung. Auf der Gleitschräge ist zumindest stellenweise in Querrichtung der Auffahrrampe 4 eine reibungsvermindemde Gleitauflage 32 angeordnet. An den beiden seitlichen Enden der Gleitschräge 31 sind die Führungsrollen 27 um Drehachsen 39 drehbar gelagert, wobei die Drehachsen senkrecht zur Gleitschräge 31 verlaufen.

Die Endloskette 16 ist um die Umlenkrolle 18 herumgeführt, wobei ein Kettenglied der Endloskette an einer Verbindungsstelle 37 mit der Querachse 13 beispielsweise durch Verschweißen verbunden ist.

In der in Figur 3 dargestellen Ausziehstellung der Auffahrrampe 4 liegt ein Begrenzungsanschlag 22, der vom Lagerende 10 der Auffahrrampe 4 nach unten absteht, an der Lagerrolle 21 an. Entsprechend zur Anzahl der Lagerrollen 21 kann eine entsprechende Anzahl von Begrenzungsanschlägen 22 vorgesehen sein. Dabei sind die Lagerrollen 21 um eine horizontale Drehachse 33 drehbar im Bereich der Ausziehöffnung 19 gelagert, wobei sie entlang der Unterseite 23, beziehungsweise entlang der Neigungsschräge 24 der Auffahrrampe 4 von unten abrollen.

In Figur 3 ist weiterhin dargestellt, daß die Führungsrolle 14 als Führungselement 12 entlang einer Führung 11 abrollbar ist, die Teil der Rampenaufnahme 5 ist. Die Führungsrollen 14 sind bei dem dargestellten Ausführungsbeispiel seitlich zur Auffahrrampe 4 angeordnet, wobei die Auffahrrampe 4 in ihrer Einschubstellung 7, siehe Figur 2, zwischen zwei seitlichen Führungen 11 der Rampenaufnahme 5 angeordnet ist.

## Patentansprüche

1. Fahrzeug (1) mit wenigstens einer Ladeplattform (2), an deren hinterem Ende (3) eine Auffahrrampe (4) in einer Rampenaufnahme (5) mit einer Ausziehöffnung (19) zwischen einer Ausziehstellung (6) und einer Einschubstellung (7) verstellbar ist, wobei die Auffahrrampe (4) zum automatischen Verschieben mit einem Antrieb (9) bewegungsverbunden und in ihrer Ausziehstellung (6) selbsttätig in einer geneigten Auffahrstellung (8) angeordnet ist,
**dadurch gekennzeichnet,**
**dass** in Richtung Ausziehstellung (6) der Rampenaufnahme (5) nachgeordnet und in dieser Richtung beabstandet zur Ausziehöffnung (19) seitliche Führungselemente (27) für die Auffahrrampe (4) angeordnet sind.

2. Fahrzeug nach Anspruch 1,
**dadurch gekennzeichnet,**
**daß** im wesentlichen an einem der Rampenaufnahmen (5) in Ausziehstellung (6) zugeordneten Lagerende (10) der Auffahrrampe (4) wenigstens ein entlang einer Führung (11) der Rampenaufnahme (5) bewegbares Führungselement (12) angeordnet ist.

3. Fahrzeug nach Anspruch 1 oder 2,
**dadurch gekennzeichnet,**
**daß** das Führungselement (12) eine um eine horizontale Achse (13) drehbar gelagerte Führungsrolle (14) ist.

4. Fahrzeug nach wenigstens einem der vorangehenden Ansprüche, **dadurch gekennzeichnet,**
**daß** zwei Führungsrollen (14) seitlich zur Auffahrrampe (4) an einer Querachse (13) am Lagerende (10) gelagert sind.

5. Fahrzeug nach wenigstens einem der vorangehenden Ansprüche, **dadurch gekennzeichnet,**
**daß** der Antrieb (9) durch einen Hydraulikmotor (15) und eine mit diesem und der Auffahrrampe (4) bewegungsverbundene Endloskette (16) gebildet ist.

6. Fahrzeug nach wenigstens einem der vorangehenden Ansprüche, **dadurch gekennzeichnet,**
**daß** die Endloskette (16) um ein Kettenrad (17) am Hydraulikmotor (15) und eine Umlenkrolle (18) benachbart zu einer Ausziehöffnung (19) der Rampenaufnahme (5) herumgeführt ist.

7. Fahrzeug nach wenigstens einem der vorangehenden Ansprüche, **dadurch gekennzeichnet,**
**daß** die Endloskette (16) mit der Querachse (13) am Lagerende (10) der Auffahrrampe (4) verbunden ist.

8. Fahrzeug nach wenigstens einem der vorangehenden Ansprüche, **dadurch gekennzeichnet,**
**daß** die Auffahrrampe (4) durch zwei voneinander beabstandete Auffahrschienen (20) gebildet ist.

9. Fahrzeug nach wenigstens einem der vorangehenden Ansprüche, **dadurch gekennzeichnet,**
**daß** quer zur Rampenaufnahme (5) an deren Ausziehöffnung (19) Lagerrollen (21) um eine horizontale Drehachse drehbar gelagert sind.

10. Fahrzeug nach wenigstens einem der vorangehenden Ansprüche, **dadurch gekennzeichnet,**
**daß** die Auffahrrampe (4) an ihrem Lagerende (10) wenigstens einen Begrenzungsanschlag (22) aufweist.

11. Fahrzeug nach wenigstens einem der vorangehenden Ansprüche, **dadurch gekennzeichnet,**
**daß** die Auffahrrampe benachbart zu ihrem Lagerende (10) auf ihrer Unterseite (23) eine Neigungsschräge (24) aufweist.

12. Fahrzeug nach wenigstens einem der vorangehenden Ansprüche, **dadurch gekennzeichnet,**
**daß** der Ausziehöffnung (19) der Rampenaufnahme (5) ein Verschlußdeckel (25) zugeordnet ist.

13. Fahrzeug nach wenigstens einem der vorangehenden Ansprüche, **dadurch gekennzeichnet,**
**daß** der Verschlußdeckel (25) in Richtung Schließstellung (26) federbelastet ist.

14. Fahrzeug nach wenigstens einem der vorangehenden Ansprüche, **dadurch gekennzeichnet,**
**daß** die Führungselemente (27) durch am Verschlußdeckel drehbar gelagerte Führungsrollen gebildet sind, die seitlich an der Auffahrrampe (4) abrollen.

15. Fahrzeug nach wenigstens einem der vorangehenden Ansprüche, **dadurch gekennzeichnet,**
**daß** jeweils eine Endloskette (16) für jede Auffahrschiene (20) angeordnet ist und im wesentlichen mittig zur Auffahrschiene verläuft.

16. Fahrzeug nach wenigstens einem der vorangehenden Ansprüche, **dadurch gekennzeichnet,**
**daß** der Verschlußdeckel (25) an seinem unteren Ende (28) um eine horizontale Schwenkachse (29) an der Rampenaufnahme (5) oder am Fahrzeug (1) verschwenkbar gelagert ist und an seinem oberen Ende (30) eine Gleitschräge (31) zur Anlage an die Unterseite (23) der Auffahrrampe (4) aufweist.

17. Fahrzeug nach wenigstens einem der vorangehenden Ansprüche, **dadurch gekennzeichnet,**
**daß** eine Gleitauflage (32) auf der Gleitschräge (31) zumindest stellenweise in Querrichtung der Auffahrrampe (4) angeordnet ist.

## Claims

1. Vehicle (1) with at least one load platform (2) at the rear end (3) of which an access ramp (4) in a ramp stowage (5) with a deployment opening (19) is displaceable between a deployed position (6) and a stowed position (7), wherein the access ramp (4) is kinematically connected to a drive (9) for automatic displacement and automatically assumes an inclined access position (8) in its deployed position (6), **characterized in that** lateral guide elements (27) for the access ramp (4) are arranged to the rear of the ramp stowage (5) in the direction of the deployed position (6) and at a distance from the deployment opening (19) in this direction.

2. Vehicle according to Claim 1, **characterized in that** at least one guide element (12) movable along a guide (11) of the ramp stowage (5) is arranged essentially at a bearing end (10) of the access ramp (4) co-operating with the ramp stowages (5) in the deployed position (6).

3. Vehicle according to Claim 1 or Claim 2, **characterized in that** the guide element (12) is a guide roller (14) mounted rotatably about a horizontal axis (13).

4. Vehicle according to at least one of the preceding claims, **characterized in that** two guide rollers (14) are mounted one on either side of the access ramp (4) on a transverse axle (13) at the bearing end (10).

5. Vehicle according to at least one of the preceding claims, **characterized in that** the drive (9) is formed by a hydraulic motor (15) and an endless chain (16) kinematically connected to the latter and to the access ramp (4).

6. Vehicle according to at least one of the preceding claims, **characterized in that** the endless chain (16) is led round a chain wheel (17) on the hydraulic motor (15) and an idler pulley (18) adjacent to a deployment opening (19) of the ramp stowage (5).

7. Vehicle according to at least one of the preceding claims, **characterized in that** the endless chain (16) is connected to the transverse axle (13) at the bearing end (10) of the access ramp (4).

8. Vehicle according to at least one of the preceding claims, **characterized in that** the access ramp (4) is formed by two spaced-apart track rails (20).

9. Vehicle according to at least one of the preceding claims, **characterized in that** bearing rollers (21) are mounted rotatably about a horizontal axis, across the ramp stowage (15) at its deployment opening (19).

10. Vehicle according to at least one of the preceding claims, **characterized in that** the access ramp (4) has at least one limit stop (22) at its bearing end (10).

11. Vehicle according to at least one of the preceding claims, **characterized in that** the access ramp has a raked surface (24) on its underside (23) adjacent to its bearing end (10).

12. Vehicle according to at least one of the preceding claims, **characterized in that** the deployment opening (19) of the ramp stowage (5) is provided with a shutter (25).

13. Vehicle according to at least one of the preceding claims, **characterized in that** the shutter (25) is spring-loaded in the direction towards the closed position (26).

14. Vehicle according to at least one of the preceding claims, **characterized in that** the guide elements (27) are formed by guide rollers rotatably mounted on the shutter which roll on lateral surfaces of the access ramp (4).

15. Vehicle according to at least one of the preceding claims, **characterized in that** an endless chain (16) is provided for each track rail (20) and is aligned essentially centrally with respect to the track rail.

16. Vehicle according to at least one of the preceding claims, **characterized in that** at its lower end (28) the shutter (25) is mounted tiltably about a horizontal hinge axis (29) on the ramp stowage (5) or on the vehicle (1) and at its upper end (30) the shutter(25) has a slide inclination (31) which comes to bear on the underside (23) of the access ramp (4).

17. Vehicle according to at least one of the preceding claims, **characterized in that** on the slide inclination (31) a slide support (32) is arranged at least at selected points in the transverse direction of the access ramp (4).

## Revendications

1. Véhicule (1) ayant au moins une plate-forme de chargement (2) à l'extrémité arrière (3) de laquelle une rampe d'accès (4) peut être déplacée entre une position sortie (6) et une position rentrée (7) dans un logement de rampe (5) ayant une ouverture de sortie (19), la rampe d'accès (4) étant reliée de manière mobile à un entraînement (9) pour le déplacement automatique et disposée dans sa position sortie (6) automatiquement dans une position d'accès (8) inclinée,
**caractérisé en ce que**
des éléments de guidage (27) latéraux pour la rampe d'accès (4) sont disposés en aval du logement de rampe (5) dans la direction de la position sortie (6) et, dans cette direction, à distance de l'ouverture de sortie (19).

2. Véhicule selon la revendication 1,
**caractérisé en ce que,**
essentiellement à une extrémité d'appui (10) de la rampe d'accès (4) affectée au logement de rampe (5) en position sortie (6), il est monté au moins un élément de guidage (12) mobile le long d'un guidage (11) du logement de rampe (5).

3. Véhicule selon la revendication 1 ou 2,
**caractérisé en ce que,**
l'élément de guidage (12) est un galet de guidage (14) monté de manière mobile autour d'un axe horizontal (13).

4. Véhicule selon au moins l'une des revendications précédentes, **caractérisé en ce que**
deux galets de guidage (14) sont montés latéralement à la rampe d'accès (4) sur un axe transversal (13) à l'extrémité d'appui (10).

5. Véhicule selon au moins l'une des revendications précédentes, **caractérisé en ce que**
l'entraînement (9) est formé par un moteur hydraulique (15) et une chaîne sans fin (16) reliée de manière mobile à celui-ci et à la rampe d'accès (4).

6. Véhicule selon au moins l'une des revendications précédentes, **caractérisé en ce que**
la chaîne sans fin (16) est guidée autour d'une roue à chaîne (17) sur le moteur hydraulique (15) et d'un galet de renvoi (18) contigu à une ouverture de sortie (19) du logement de rampe (5).

7. Véhicule selon au moins l'une des revendications précédentes, **caractérisé en ce que**
la chaîne sans fin (16) est solidaire de l'axe transversal (13) à l'extrémité d'appui (10) de la rampe d'accès (4).

8. Véhicule selon au moins l'une des revendications précédentes, **caractérisé en ce que**
la rampe d'accès (4) est formée par deux rails d'accès (20) situés à distance l'un de l'autre.

9. Véhicule selon au moins l'une des revendications précédentes, **caractérisé en ce que,**
transversalement au logement de rampe (5), au niveau de son ouverture de sortie (19), des galets d'appui (21) sont montés de manière à pouvoir tourner autour d'un axe de rotation horizontal.

10. Véhicule selon au moins l'une des revendications précédentes, **caractérisé en ce que**
la rampe d'accès (4) présente à son extrémité d'appui (10) au moins une butée de limitation (22).

11. Véhicule selon au moins l'une des revendications précédentes, **caractérisé en ce que**
la rampe d'accès présente, au voisinage de son extrémité d'appui (10), sur sa face inférieure (23), une coupe oblique (24).

12. Véhicule selon au moins l'une des revendications précédentes,
**caractérisé en ce qu**'un couvercle de fermeture (25) est affecté à l'ouverture de sortie (19) du logement de rampe (5).

13. Véhicule selon au moins l'une des revendications précédentes, **caractérisé en ce que**
le couvercle de fermeture (25) est commandé par ressort dans la direction de la position de fermeture (26).

14. Véhicule selon au moins l'une des revendications précédentes, **caractérisé en ce que**
les éléments de guidage (27) sont formés par des galets de guidage montés de manière rotative sur le couvercle de fermeture, qui roulent latéralement sur la rampe d'accès (4).

15. Véhicule selon au moins l'une des revendications précédentes,
**caractérisé en ce qu**'une chaîne sans fin (16) est montée pour chaque rail d'accès (20) et passe essentiellement au centre par rapport au rail d'accès.

16. Véhicule selon au moins l'une des revendications précédentes, **caractérisé en ce que**
le couvercle de fermeture (25) est monté sur le logement de rampe (5) ou le véhicule (1) de manière à pouvoir être pivoté à son extrémité inférieure (28) autour d'un axe de pivotement (29) horizontal et présente à son extrémité supérieure (30) une coupe oblique de glissement (31) destinée à reposer contre la face inférieure (23) de la rampe d'accès (4).

17. Véhicule selon au moins l'une des revendications précédentes,
**caractérisé en ce qu**'un revêtement glissant (32) est disposé, au moins par endroits, dans la direction transversale à la rampe d'accès (4), sur la coupe oblique de glissement (31).
